# EUROPÄISCHE PATENTSCHRIFT

(11) **EP 0 410 248 B1**
(45) Veröffentlichungstag und Bekanntmachung des Hinweises auf die Patenterteilung: **14.12.1994**
(21) Anmeldenummer: 90113543.4
(22) Anmeldetag: 14.07.1990
(51) Int. Cl.: C09J 7/02

(54) **Mehrschichtiges, flexibles Markierband**
Multilayer flexible marking tape
Ruban de marquage flexible et multicouche

(30) Priorität: 28.07.1989 DE 3925130
(43) Veröffentlichungstag der Anmeldung: 30.01.1991
(73) Patentinhaber: Pelikan GmbH, 30177 Hannover (DE)
(72) Erfinder: Weissmann, Karl-Heinz, D-3000 Hannover 1 (DE); Titze, Lothar, D-3162 Uetze 1 (DE)
(74) Vertreter: Volker, Peter, Dr.

(56) Entgegenhaltungen:
- EP-A- 0 277 426
- GB-A- 1 095 478
- US-A- 2 387 512

## Beschreibung

Die Erfindung betrifft ein mehrschichtiges, flexibles Markierband mit einem Hilfsträger und einer Haftkleberschicht, wobei zwischen dem Hilfsträger und der Haftkleberschicht eine bindemittelhaltige Deckschicht, die zur Haftkleberschicht eine stärkere Haftung als zum Hilfsträger aufweist, vorliegt.

Unter dem Stichwort "Highlighting" von Wörtern oder Abschnitten in Textbüchern, Übungsbüchern usw. ist es aus der EP-A-87 102 047.5 bekannt, hierzu fluoreszierende Haftklebebänder heranzuziehen. Das bekannte fluoreszierende Haftklebeband hat den Vorteil, daß die Markierung später von der Textstelle wieder entfernt werden kann. Der auf die jeweilige Passage des Textes aufgebrachte Markierstreifen besteht aus einer Haftkleberschicht, einer nachfolgenden Trägerschicht, auf der sich eine eingefärbte fluoreszierende Deckschicht befindet. Damit das abgedeckte Schriftbild noch sichtbar ist, muß das Gesamtsystem transparent sein. Als weitere Alternative beschreibt diese europäische Patentanmeldung eine Ausbildung, bei der die Folge der angesprochenen Schichten geändert ist. Dabei befindet sich die fluoreszierende Deckschicht zwischen der Haftkleberschicht und der Trägerschicht. Die Trägerschicht ist Zum späteren Entfernen des markierenden Streifens vom jeweiligen Text nötig. Das bekannte 3-schichtige Markierband hat Fertigungs- und Kostennachteile. Darüber hinaus hat es den Nachteil, daß es nicht von selbst abreißt, sondern abgeschnitten werden muß.

Die US-A-2 387 512 befaßt sich mit einem lumineszierenden Klebeband, das auf Geländern, an Torwegen, Eingängen, in Treppenhäusern und kleineren Objekten zur Identifizierung in der Dunkelheit angebracht werden kann (vgl. S. 1, 1. Sp., z. 1-5). Dieses Band weist ein transparentes Basisblatt und auf einer Seite davon eine im wesentlichen transparente dünne Schicht eines Gummis, eine Schicht eines lumineszierenden Pigments und darauf eine weitere Schicht eines Gummiklebstoffs auf (vgl. Anspruch 1 in Verbindung mit Fig. 2).

Der Erfindung liegt die Aufgabe zugrunde, das einleitend bezeichnete mehrschichtige, flexible Markierband so weiterzubilden, daß ein auf ein Substrat aufgetragener Markierstreifen ohne Beschädigung des Substrates ohne weiteres wieder entfernt werden kann, beispielsweise durch einfaches Reiben mit dem Daumen oder mit einem Radiergummi, und es in einem üblichen Handroller einsetzbar ist.

Erfindungsgemäß wird diese Aufgabe dadurch gelöst, daß die Haftkleberschicht mit einem Farbmittel eingefärbt ist und die bindemittelhaltige Deckschicht 5 bis 20 Gew.-% Haftkleber enthält.

Das erfindungsgemäße Markierband weist zwar einen Hilfsträger auf und könnte den Eindruck erwecken, daß es hier gegenüber dem vorstehend beschriebenen bekannten Markierband keinen Vorteil bietet. Der Hilfsträger kann jedoch frei ausgewählt werden und ermöglicht insbesondere das Abrollen aus einem nachfolgend noch detailliert geschilderten Handgerät. Der letztlich auf die jeweilige Textstelle bzw. zu markierende Stelle aufgebrachte 2-schichtige Markierstreifen gemäß der Erfindung reißt bei geeignetem Zug von selbst, insbesondere unter Verwendung dieses Handgerätes.

Der Hilfsträger besteht vorzugsweise aus einer Kunststoffolie, wie sie bei Trägern von Schreibmaschinenbändern herangezogen wird, so z.B. aus Polyethylenterephthalat, Polyproplyen, Polyethylen, Polyvinylchlorid oder Polycarbonat. Als geeignet hat sich als Hilfsträger insbesondere auch ein silikonbeschichtetes Papier erwiesen. Die Silikonbeschichtung führt zu einer Verringerung der Haftspannung zwischen Deckschicht und Hilfsträger. Sie kann auch durch andere Antihaftmittel ersetzt werden, wie beispielsweise durch Polytetrafluorethylen.

Der Hilfsträger hat vorzugsweise eine Stärke von 10 bis 60 µm, insbesondere von 15 bis 55 µm, die Deckschicht vorzugsweise eine Stärke von 3 bis 10 µm, insbesondere 5 bis 7 µm, und die Haftkleberschicht vorzugsweise eine Stärke von 10 bis 30, insbesondere 15 bis 25 µm.

Zur Optimierung des erfindungsgemäßen Markierbandes wählt man zweckmäßigerweise ein Dickenverhältnis der Haftkleberschicht zu der Deckschicht von 8:1 bis 1:1, insbesondere 5:1 bis 1:1. Von Vorteil ist es, wenn das gesamte Markierband 10 bis 50µm, insbesondere 15 bis 30 µm stark ist.

Die Haftkleberschicht kann aus handelsüblichen Haftklebstoffen bestehen, so aus Materialien, die elastische und dauernd klebfähige Selbstklebemassen mit großen Adhäsionskräften darstellen und die bereits unter geringem Druck bei Raumtemperatur auf den verschiedenen Oberflächen sofort haften. Sie werden vorzugsweise in wässriger Lösung auf die sich bereits auf dem Hilfsträger befindende Deckschicht aufgetragen, da so die bereits ausgebildete Deckschicht nicht wieder aufgelöst wird. Unter Haftklebern dieser Art sind insbesondere solche auf Acrylat-Basis vorteilhaft. Bei den Ausgangsmaterialien kann es sich um viskose Lösungen oder Dispersionen handeln, insbesondere um wässrige Dispersionen, die auf Kautschuk, Polyacrylaten, Polyvinylethern bzw. Polyvinylisobutylen beruhen. Bevorzugt werden Materialien auf der Basis von Polyacrylaten. Geeignete Handelsprodukte sind UCECRYL 913^{R} (vertrieben von der Fa. ucb, Belgien), die Kunststoffdispersion Jagotex KEM 2318 (vertrieben von der Fa. Jäger) sowie die Kunststoffdispersion Acronal V205 (vertrieben von der Fa. BASF). Von ganz besonderem Vorteil ist das Handelsprodukt Vantac 295 PEL, das in Form einer anionischen wässrigen Dispersion eines carboxylierten Acrylsäurecopolymers vorliegt und hauptsächlich aus Butylacrylat besteht, wobei geringere Anteile an Methylmethacrylat-Comonomer vorliegen. Der Feststoffgehalt beträgt 52 Gew.-%, der pH-Wert 6,0 die Viskosität bei 20°C 500 cP, das Molekulargewicht (Gewichtsmittel) etwa 910000 (MW) und das mittlere Teilchengewicht etwa 270000 (MN) (etwa 910 kg/mol bzw. 270 kg/mol).

Die im Handel erhältlichen Haftklebermaterialien sind nicht sämtlich geeignet, um eine besonders vorteilhafte Ausgestaltung der Erfindung zu ermöglichen, nämlich das spätere leichte Abreiben bzw. Abrubbeln des aufgebrachten Markierstreifens, sofern es gewünscht wird. Daher wird dann vorteilhafterweise ein solcher Haftkleber ausgewählt, der dieses Abreiben ohne weiteres ermöglicht. Dies gilt beispielsweise für die oben bereits genannten Vantac-Haftkleber. Welche Haftkleber jeweils besonders gut geeignet sind, läßt sich vom Fachmann anhand eines einfachen Handversuches feststellen.

Vorzugsweise enthält das aufzubringende Haftklebermaterial, das regelmäßig in einem wässrigen Medium vorliegt, handelsübliche Netzmittel bzw. Tenside (vertrieben unter der Handelsbezeichnung Lumiten IRA von der Fa. BASF).

Die genannten Lösungen oder Dispersionen des Haftklebers zur Ausbildung der Haftkleberschicht werden vorzugsweise in einer Menge von 10 bis 30 g/m², ganz besonders bevorzugt in einer Menge von 15 bis 25 g/m² auf die Deckschicht aufgetragen, wobei sich diese Angaben auf die Trockensubstanz beziehen.

Zur Ausbildung der Deckschicht werden vorzugsweise thermoplastische oder thermoelastische Polymere in Lösung oder in Form einer Dispersion, insbesondere einer wässrigen Dispersion, eingesetzt. Hier unterliegt die Erfindung keinen wesentlichen Beschränkungen. Das jeweilige Bindemittel ist nicht klebrig. Im Rahmen der Erfindung lassen sich daher mit Vorteil folgende Substanzen einsetzen:
a) Polyurethane eines Molekulargewichtes von 15.000 bis 50.000, z.B. Permuthane U 4924 der Fa. Stahl-Chemie oder Desmolac 2100 der Fa. Bayer AG,
b) lineare gesättigte Polyester eines Molekulargewichtes von 20.000 bis 30.000, z.B. Vitel PE 307 der Goodyear Tire + Rubber,
c) Styrol-Isopren-Styrol-Copolymerisate, z.B. Cariflex TR 1107 der Fa. Shell-Chemie,
d) Acrylate und Methacrylate, z.B. Pexigum 7 H der Roehm GmbH,
e) Polyamide, diphenylsäure-modifiziert, z.b. Scope 30 der Fa. Rhone-Poulenc oder Emerez 1533 der Fa. Emery Chemicals,
f) Polymerdispersionen auf der Basis von Vinylpropionat, z.B. Propiofan 6D der Fa. BASF,
g) carboxymethylgruppenhaltiges, in Wasser lösliches Polymethacrylat, z.B. Rohagit SD15 der Fa. Roehm GmbH und
h) wachsartige Polyolefindispersionen, insbesondere die wässrige Polyethylendispersion des Handelsnamens Epotal 181D der Fa. BASF,
i) die wässrige Dispersion eines Acrylsäureester-Styrol-Copolymers, vertrieben unter der Handelsbezeichnung Acronal 290D von der Fa. BASF, und
j) eine wässrige Copolymerdispersion aus Acryl- und Methacrylsäureestern, vertrieben unter der Handelsbezeichnung Acronal 627 von der Fa. BASF.

Die obige Aufzählung der Materialien, die zur Ausbildung der Deckschicht des erfindungsgemäßen Markierbandes geeignet sind, erhebt keinen Anspruch auf Vollständigkeit und bedeutet keine Einschränkung in der Auswahl. Vielmehr ist es für den Fachmann ohne weiteres ersichtlich, daß auch noch andere Bindemittel in Frage kommen können, zumal in der Art des Bindemittels nicht das Wesen der Erfindung zu sehen ist.

Um das oben angesprochene Abreiben des Markierbandes besonders zu begünstigen, enthält die angesprochene Deckschicht vorzugsweise einen geringen Anteil an Haftkleber der oben erwähnten Haftklebematerialien, vorzugsweise 5 bis 20 Gew.-%, insbesondere 10 bis 15 Gew.-%.

Das Wesen der Erfindung besteht darin, daß, was im Stand der Technik nirgendwo angesprochen wird, die gegenüber der Deckschicht vorzugsweise stärker ausgebildete Haftkleberschicht das Farbmittel enthält. Dieses kann ein Farbstoff sein. Die Markiereffizienz ist besonders günstig, wenn anstelle des Farbstoffs bzw. zusätzlich hierzu ein Pigment, insbesondere ein fluoreszierendes Pigment, herangezogen wird. Um die wünschenswerte Transparenz des gesamten aufgetragenen Markierstreifens zu gewährleisten, liegt dieses Pigment vorzugsweise in besonders feinteiliger Form vor, vorzugsweise in einer Teilchengröße von weniger als 2µm, insbesondere weniger als 1 µm. Als fluoreszierendes Pigment kommen insbesondere Pigmentteige der Handelsbezeichnung Sinloihi (vertrieben von der Fa. Worlée-Chemie GmbH) in Frage. Hier sind die feinteiligen Pigmente in einem synthetischen Harz eingebettet. Sie überschreiten dennoch die oben angesprochene vorteilhafte Teilchengröße nicht. Die Sinloihi-Handelsprodukte sind in verschiedenen Farben erhältlich, so unter der zusätzlichen Benennung (neben Sinloihi) SW-12 Green, SW-27 Rosé, SW-14 Orange und SW-15 Yellow.

In Einzelfällen kann es von Vorteil sein, wenn zusätzlich zur Haftkleberschicht auch noch die Deckschicht einen Farbmittelanteil aufweist, insbesondere in Form der fluoreszierenden Pigmente. Dabei ist auch der oben angesprochene Teilchengrößengesichtspunkt zu beachten. Demzufolge wird dem Ausgangsmaterial der Deckschicht, insbesondere in Form einer wässrigen Dispersion des Bindemittels, in einem gewissen Anteil das Farbmittel einverleibt, so in einer Gewichtsmenge von 2 bis 35%, insbesondere 10 bis 20% , bezogen auf Trockensubstanz.

Die Hauptfunktion beim Markieren erfüllt die eingefärbte insbesondere pigmentierte Haftkleberschicht. Deren optimaler Farbmittel-, insbesondere Pigmentgehalt, hängt von verschiedenen Faktoren ab, so von der Art des gewählten Haftklebers, des Pigments selbst und eventuell weiterer einverleibter Additive. Ein besonders kritischer Wert bzw. kritischer Bereich kann nicht angegeben werden. In der Haftkleberschicht liegt das Farbmittel, insbesondere das Pigment, vorzugsweise in einer Gewichtsmenge von 5 bis 35%, insbesondere 10 bis 20%, bezogen auf Trockensubstanz, vor.

Die oben beschriebenen Materialien der einzelnen Schichten des erfindungsgemäßen Markierbandes genügen in der Regel der Grundforderung, daß die Haftspannung (definiert über die Adhäsionsarbeit entsprechend der Dupre'schen Gleichung, Lit.: K.L. Wolf "Physik und Chemie der Grenzflächen", Springer Verlag 1957, S. 164) zwischen der Haftkleberschicht und der Deckschicht größer als die zwischen dem Hilfsträger und der Deckschicht ist. Sollte das im Einzelfall nicht zutreffen, dann müßte eine geeignete Antihaftschicht auf den Hilfsträger aufgebracht werden, um diese Grundforderung zu erfüllen. In solchen Fällen wird regelmäßig eine weitere Forderung eingehalten, wonach die auf dem Hilfsträger ausgebildete Deckschicht gegenüber anderen damit in Kontakt gelangenden Materialien, insbesondere Papier, nicht-haftend ist. Somit lassen sich im Ergebnis folgende Haftspannungsverhältnisse zur erfolgreichen Verwendung des erfindungsgemäßen Markierbandes angeben, wobei das Symbol "S" das Haftspannungsverhältnis zwischen den unterschiedlichen Materialien wiedergibt, so S₁ Papier/Haftklebeschicht, S₂ Deckschicht/Haftklebeschicht, S₃ Deckschicht/Hilfsträger, S₄ Deckschicht/Papier und S₅ Haftkleberschicht/Hilfsträger und möglichst folgende Forderungen einzuhalten. S₁ größer als S₃, S₂ größer als S₃ und S₅ sehr viel kleiner als S₂ Ferner sollte die freie Oberfläche der auf ein Substrat, insbesondere auf Papier, aufgetragenen Deckschicht nach außen möglichst keinerlei Haftvermögen zeigt, d.h. S₄ ist dann Null bzw. strebt gegen Null. Mit anderen Worten bedeutet das, daß die Deckschicht bei Berühren mit Hand oder mit Papier nicht-haftend sein soll.

Das vorteilhafte Verfahren zur Herstellung des erfindungsgemäßen Markierbandes ist dadurch gekennzeichnet, daß eine wässrige Bindemitteldispersion mit einem Gehalt an einem filmbildenden Bindemittel nach üblichen Auftragstechnologien auf einen flexiblen Hilfsträger aufgetragen, der wässrige Anteil bei erhöhter Temperatur abgedampft, darauf eine einen Haftkleber enthaltende wässrige eingefärbte Dispersion nach üblichen Auftragstechnologien auf die ausgebildete Deckschicht aufgetragen und danach der wässrige Anteil abgedampft wird.

Bei der Verwendung des erfindungsgemäßen Markierbandes bedient man sich vorteilhafterweise handelsüblicher Auftragsgeräte, insbesondere Handgeräte, die ein Abrollen der mit dem eingefärbten Haftkleber versehenen Deckschicht bei gleichzeitigem Einzug des Hilfsträgers ermöglichen. Dies führt zu einer besonders leichten Handhabung des erfindungsgemäßen Markierbandes. Als ein besonders geeignetes Handgerät kann ein sogenannter "Handroller" eingesetzt werden, bei dem innerhalb eines griffgünstig gestalteten Gehäuses eine Vorratsspule mit dem Markierband vorgesehen ist, von der aus es über einen aus dem Gehäuse vorstehenden Auftragsfuß geführt und von diesem wieder auf eine Aufwickelspule in das Gehäuse zurückgeleitet wird. Durch ein geeignetes Getriebe zwischen beiden Spulen im Gehäuse wird sichergestellt, daß das Markierband stets ausreichend gespannt geführt wird. Der Benutzer nimmt zum Einsatz des Markierbandes das Gehäuse in seine Hand und drückt mittels des Auftragsfußes die über dessen Endkante laufende äußere (ablösbare) Haftkleberschicht gegen das Substrat auf das der Übertrag erfolgen soll. Während des Andrückens bewegt der Benutzer das Gerät relativ zum Substrat und überträgt dabei die mit der fluoreszierenden Haftklebeschicht zusammen mit der damit verbundenen Deckschicht auf das Substrat, wobei der flexible Hilfsträger von der Vorratsspule ab- und auf die Abwickelspule aufgewickelt wird.

Das erfindungsgemäße Markierband zeigt vielfältige Vorteile:
Es ist geeignet, wichtige Wort- und Satzteile in Büchern und dergleichen transparent zu markieren. Dabei kann das Entfernen des Markierstreifens mittels eines Radiergummis oder in Einzelfällen durch Handreiben erfolgen. Es können somit in vorteilhafter Weise Textstellen, Zeichen oder bildliche Darstellungen in einem Vorlagetext hervorgehoben werden. Für den Fall, daß der Pigmentanteil in der Haftkleberschicht oder auch in der Deckschicht besonders hoch gewählt wird und nicht mehr Transparenz erwünscht ist, kann auf beliebigen Substraten ein abdeckender Markierstreifen aufgetragen werden, der entfernbar ist, so daß es hier beispielsweise als Korrekturmittel in Büro, Schule und Haushalt zum Abdecken fehlerhafter Schriftzeichen etc. herangezogen werden kann. Die Deckschicht kann mit geeigneten Schreibgeräten beschriftet werden, wenn es von Vorteil ist. Grundsätzlich lassen sich auch gegenüber Lufteinwirkung und dergleichen empfindliche Schriftzeichen mit dem erfindungsgemäßen Markierband konservieren.

Die Erfindung wird nachfolgend anhand von Beispielen noch näher erläutert.

### Beispiel 1

Es wurde zunächst folgende Dispersion zur Ausbildung der Deckschicht hergestellt:

| | |
|---|---|
| Polyethylendispersion (39%ig, wässrig) (Epotal 181 D) | 68 Gew.-Teile |
| Natriumsalz eines Sulfobernsteinsäureesters (65%ig, wässrig) (Lumiten IRA) | 2 Gew.-Teile |
| Carboxyliertes Acrylsäurecopolymer (52%ig, wässrig) (Vantac XX 36/11) | 10 Gew.-Teile |
| Fluoreszenz-Pigmentteig (40%ig, wässrig) (Sinloihi SW-15 Yellow) | 10 Gew.-Teile |
| | 100 Gew.-Teile |

Die vorstehende Masse wurde mit einer Rackel in einer Menge von 11 g/m² (bezogen auf Trockensubstanz) auf einen silikonisierten Papierträger aufgetragen. Dann wurde der wässrige Anteil bei etwa 100°C durch Überleiten von Heißluft abgedampft. Anschließend wurde, gleichfalls mit einer Rackel, eine wässrige Dispersion, die aus folgenden Bestandteilen bestand, zur Ausbildung der Haftkleberschicht auf die Oberfläche der ausgebildeten Deckschicht aufgetragen:

| | |
|---|---|
| Carboxyliertes Acrylsäurecopolymer (52%ig, wässrig) (Vantac XX 36/11) | 89 Gew.-Teile |
| Natriumsalz eines Sulfobernsteinsäureesters (65%ig, wässrig) (Lumiten IRA) | 1 Gew.-Teil |
| Fluoreszenz-Pigmentteig (40%ig, wässrig) (Sinloihi SW-15 Yellow) | 10 Gew.-Teile |
| | 100 Gew.-Teile |

Die obige pigmentierte Haftkleberdispersion wurde mit einer Rackel in einer Menge von 45 g/m² (bezogen auf Trockensubstanz) aufgetragen. Dann wurde der Wasseranteil bei etwa 100°C durch Überleiten von Heißluft abgedampft.

Das erhaltene Markierband war zum Markieren von Textstellen, Zeichen und bildlichen Darstellungen in beliebigen Papiervorlagetexten geeignet. Das Auftragen erfolgte mit einem im Handel erhältlichen Handroller.

### Beispiel 2

Das Beispiel 1 wurde dahingehend abgewandelt, daß als Dispersion zur Ausbildung der Deckschicht bzw. der Haftkleberschicht folgende Rezepturen herangezogen wurden:

| Deckschicht: | |
|---|---|
| Acryl-Methacryl-Copolymer (50%ig, wässrig) (Acronal 627) | 71 Gew.-Teile |
| Natriumsalz eines Sulfobernsteinsäureesters (65%ig, wässrig) (Lumiten IRA) | 1 Gew.-Teil |
| Acrylsäurecopolymer (62%ig, wässrig) (Ucecryl 913) | 8 Gew.-Teile |
| Fluoreszenz-Pigmentteig (40%ig, wässrig) (Sinloihi SW-12 Green) | 20 Gew.-Teile |
| | 100 Gew.-Teile |

| Haftkleberschicht: | |
|---|---|
| Acrylsäurecopolymer (62%ig, wässrig) (Ucecryl 913) | 80 Gew.-Teile |
| Natriumsalz eines Sulfobernsteinsäureesters (65%ig, wässrig) (Lumiten IRA) | 2 Gew.-Teile |
| Fluoreszenz-Pigmentteig (40%ig, wässrig) (Sinloihi SW-12 Green) | 18 Gew.-Teile |
| | 100 Gew.-Teile |

### Beispiel 3

Beispiel 1 wurde dahingehend abgewandelt, daß zur Ausbildung des Markierbandes folgende Rezepturen herangezogen wurden:

| Deckschicht: | |
|---|---|
| Styrol-Acrylsäurester-Copolymer (50%ig, wässrig) (Acronal 290D) | 75 Gew.-Teile |
| Natriumsalz eines Sulfobernsteinsäureesters (65%ig, wässrig) (Lumiten IRA) | 1 Gew.-Teil |
| Acrylsäurecopolymer (60%ig, wässrig) (Ucecryl PC 80) | 4 Gew.-Teile |
| Fluoreszenz-Pigmentteig (40%ig, wässrig) (Sinloihi SW-27 Rose) | 20 Gew.-Teile |
| | 100 Gew.-Teile |

| Haftkleber: | |
|---|---|
| Acrylnitrilmodifiziertes Copolymer (60%ig, wässrig) Jagotex KEM 2318) | 79 Gew.-Teile |
| Natriumsalz eines Sulfobernsteinsäureesters (65%ig, wässrig) (Lumiten IRA) | 1 Gew.-Teil |
| Fluoreszenz-Pigmentteig (40%ig, wässrig) (Sinloihi SW-27 Rose) | 20 Gew.-Teile |
| | 100 Gew. Teile |

### Beispiel 4

Das Beispiel 1 wurde dahingehend abgewandelt, daß in der Deckschicht kein Fluoreszenz-Pigmentteig enthalten war. Ein derartig hergestelltes Markierband war ebenfalls als Markierband uneingeschränkt brauchbar.

## Patentansprüche

1. Mehrschichtiges, flexibles Markierband mit einem Hilfsträger und einer Haftkleberschicht, wobei zwischen dem Hilfsträger und der Haftkleberschicht eine bindemittelhaltige Deckschicht, die zur Haftkleberschicht eine stärkere Haftung als zum Hilfsträger aufweist, vorliegt, dadurch **gekennzeichnet**, daß die Haftkleberschicht mit einem Farbmittel eingefärbt ist und die bindemittelhaltige Deckschicht 5 bis 20 Gew.-% Haftkleber enthält.

2. Markierband nach Anspruch 1, dadurch gekennzeichnet, daß das Farbmittel ein Pigment ist.

3. Markierband nach Anspruch 2, dadurch gekennzeichnet, daß das Pigment ein fluoreszierendes Pigment ist.

4. Markierband nach mindestens einem der Ansprüche 1 bis 3, dadurch gekennzeichnet, daß der Hilfsträger aus einem Kunststoff und/oder einem silikonbeschichteten Papier besteht.

5. Markierband nach mindestens einem der Ansprüche 1 bis 4, dadurch gekennzeichnet, daß die Deckschicht als Bindemittel ein Polyolefin, ein Acrylsäureester-Styrol-Copolymer oder ein Copolymer aus Acryl- und Methacrylsäureestern enthält.

6. Markierband nach Anspruch 5, dadurch gekennzeichnet, daß das Bindemittel ein wachsartiges Polyethylen ist.

7. Markierband nach mindestens einem der Ansprüche 1 bis 6, dadurch gekennzeichnet, daß das Dickenverhältnis der Haftkleberschicht zu der Deckschicht 8:1 bis 1:1 beträgt.

8. Markierband nach Anspruch 7, dadurch gekennzeichnet, daß das Dickenverhältnis 5:1 bis 2:1, insbesondere 3:1 beträgt.

9. Markierband nach mindestens einem der Ansprüche 1 bis 8, dadurch gekennzeichnet, daß es eine Gesamtstärke von 10 bis 50 µm, insbesondere 15 bis 30 µm beträgt.

10. Markierband nach mindestens einem der Ansprüche 1 bis 9, dadurch gekennzeichnet, daß die Haftkleberschicht 10 bis 30, insbesondere 15 bis 25 µm stark ist.

11. Markierband nach mindestens einem der Ansprüche 1 bis 10, dadurch gekennzeichnet, daß die Deckschicht 3 bis 10 µm, insbesondere 5 bis 7 µm stark ist.

12. Markierband nach mindestens einem der Ansprüche 1 bis 11, dadurch gekennzeichnet, daß die Haftkleberschicht 5 bis 45, insbesondere 10 bis 30 Gew.-% fluoreszierendes Pigment enthält.

13. Markierband nach mindestens einem der Ansprüche 1 bis 12, dadurch gekennzeichnet, daß die Deckschicht zusätzlich ein Farbmittel enthält, insbesondere ein fluoreszierendes Pigment.

14. Verfahren zur Herstellung eines mehrschichtigen, flexiblen Markierbandes nach mindestens einem der Ansprüche 1 bis 13, dadurch gekennzeichnet, daß eine wässrige Bindemitteldispersion mit einem Gehalt an einem filmbildenden Bindemittel nach üblichen Auftragstechnologien auf einen flexiblen Hilfsträger aufgetragen, der Wasseranteil bei erhöhter Temperatur abgedampft, darauf eine einen Haftkleber enthaltende wässrige eingefärbte Dispersion nach üblichen Auftragstechnologien auf die ausgebildete Deckschicht aufgetragen und danach das Wasser abgedampft wird.

15. Verwendung des Markierbandes nach mindestens einem der Ansprüche 1 bis 13, dadurch gekennzeichnet, daß es in aufgerollter Form in einem Handgerät eingesetzt wird.

## Claims

1. A multilayer, flexible marking tape with a carrier layer and a contact adhesive layer, wherein a binder-containing covering layer is arranged between the carrier and contact adhesive layers and adheres more strongly to the said contact adhesive layer than to the carrier layer, characterised in that the contact adhesive layer is coloured with a colouring agent and the binder-containing covering layer contains 5 to 20 per cent by weight of contact adhesive.

2. A marking tape according to claim 1, characterised in that the colouring agent is a pigment.

3. A marking tape according to claim 2, characterised in that the pigment is a fluorescing pigment.

4. A marking tape according to at least one of claims 1 to 3, characterised in that the carrier layer is made of a plastics material and/or silicon-coated paper.

5. A marking tape according to at least one of claims 1 to 4, characterised in that the covering layer contains, as the binder, a polyolefin, an acrylate ester-styrene copolymer, or a copolymer of acrylate and methacrylate esters.

6. A marking tape according to claim 5, characterised in that the binder is a wax-like polyethylene.

7. A marking tape according to at least one of claims 1 to 6, characterised in that the ratio of thickness of the contact adhesive layer to the covering layer is in the range of 8:1 to 1:1.

8. A marking tape according to claim 7, characterised in that the ratio of thickness is in the range 5:1 to 2:1 and is preferably 3:1.

9. A marking tape according to at least one of claims 1 to 8, characterised in that its overall thickness is in the range of 10 to 50 µm, and preferably 15 to 30 µm.

10. A marking tape according to at least one of claims 1 to 9, characterised in that the thickness of the contact adhesive layer is in the range 10 to 30 µm, and preferably 15 to 25 µm.

11. A marking tape according to at least one of claims 1 to 10, characterised in that the thickness of the covering layer is in the range 3 to 10 µm, and preferably 5 to 7 µm.

12. A marking tape according to at least one of claims 1 to 11, characterised in that the contact adhesive layer contains 5 to 45 per cent by weight, and preferably 10 to 30 per cent by weight, of fluorescing pigment.

13. A marking tape according to at least one of claims 1 to 12, characterised in that the covering layer additionally contains a colouring agent, preferably a fluorescing pigment.

14. A method for the production of a multilayer, flexible marking tape according to at least one of claims 1 to 13, characterised in that an aqueous binder dispersion with a content of film-forming binder is applied to a flexible carrier layer using the usual application technology, the water component is evaporated off at an elevated temperature, an aqueous coloured dispersion containing a contact adhesive is then applied to the covering layer so derived using the usual application technology, and the water subsequently evaporated off.

15. The use of the marking tape according to at least one of claims 1 to 13, characterised in that it is used in a rolled-up form in a hand-operated device.

## Revendications

1. Ruban de marquage flexible et multicouche avec un support auxiliaire et une couche auto-adhésive, pour lequel entre le support auxiliaire et la couche auto-adhésive il y a une couche de recouvrement contenant un liant, couche qui présente une adhérence plus forte par rapport à la couche auto-adhésive que par rapport au support auxiliaire, ruban de marquage caractérisé en ce que la couche auto-adhésive est colorée avec un agent colorant et en ce que la couche de revêtement contenant un liant contient 5 à 20 % d'auto-adhésif.

2. Ruban de marquage selon la revendication 1, caractérisé en ce que l'agent colorant est un pigment.

3. Ruban de marquage selon la revendication 2, caractérisé en ce que le pigment est un pigment fluorescent.

4. Ruban de marquage selon au moins l'une des revendications 1 à 3, caractérisé en ce que le support auxiliaire est en une matière plastique et/ou un papier revêtu de silicone.

5. Ruban de marquage selon l'une des revendications 1 à 4, caractérisé en ce que la couche de revêtement contient comme liant une polyoléfine, un copolymère d'esteracide acrylique-styrène ou un copolymère d'estéracide acrylique et méthacrylique.

6. Ruban de marquage selon la revendication 5, caractérisé en ce que le liant est un polyéthylène du type d'une cire.

7. Ruban de marquage selon au moins l'une des revendications 1 à 6, caractérisé en ce que le rapport d'épaisseur de la couche auto-adhésive par rapport à la couche de revêtement va de 8 à 1 à 1 à 1.

8. Ruban de marquage selon la revendication 7, caractérisé en ce que le rapport d'épaisseur va de 5 à 1 à 2 à 1 et est en particulier de 3 à 1.

9. Ruban de marquage selon au moins l'une des revendications 1 à 8, caractérisé en ce que le ruban atteint une épaisseur totale de 10 à 50 µm, en particulier de 15 à 30 µm.

10. Ruban de marquage selon au moins l'une des revendications 1 à 9, caractérisé en ce que la couche auto-adhésive a une épaisseur de 10 à 30 µm en particulier de 15 à 25 µm.

11. Ruban de marquage selon au moins l'une des revendications 1 à 10, caractérisé en ce que la couche de revêtement a une épaisseur de 3 à 10 µm, en particulier de 5 à 7 µm.

12. Ruban de marquage selon au moins l'une des revendications 1 à 11, caractérisé en ce que la couche auto-adhésive contient 5 à 45 % en poids en particulier 10 à 30 % en poids de pigments fluorescents.

13. Ruban de marquage selon au moins l'une des revendications 1 à 12, caractérisé en ce que la couche de revêtement contient en plus un agent colorant, en particulier un pigment fluorescent.

14. Procédé de fabrication d'un ruban de marquage flexible et multicouche selon au moins l'une des revendications 1 à 13, caractérisé en ce qu'on applique une dispersion aqueuse de liant avec une teneur en un liant formant un film, selon les technologies habituelles d'application, sur un support auxiliaire flexible, l'on vaporise la fraction d'eau à température élevée, on applique ensuite une dispersion monocolore aqueuse contenant un auto-adhésif sur la couche de revêtement constituée et après on vaporise l'eau.

15. Application du ruban de marquage selon au moins l'une des revendications 1 à 13, caractérisée en ce qu'on utilise le ruban de marquage sous la forme enroulée dans un appareil à main.
